# EUROPÄISCHE PATENTANMELDUNG

(11) **EP 0 653 526 A2**
(43) Veröffentlichungstag der Anmeldung: **17.05.1995**
(21) Anmeldenummer: 94112442.2
(22) Anmeldetag: 09.08.1994
(51) Int. Cl.: E04B 1/66

(54) **Abdichtelement und Verfahren zu seiner Herstellung**

(30) Priorität: 09.08.1993 DE 4326671
(71) Anmelder: Bausch, Angelika, D-23617 Stockelsdorf (DE)
(72) Erfinder: Bausch, Angelika, D-23617 Stockelsdorf (DE)
(74) Vertreter: Heldt, Gert, Dr. Dipl.-Ing.

(57) **Zusammenfassung**

Bei einem vorgefertigen Abdichtelement (1) für Ecken in Bauwerken, in denen zwei Wandflächen (32,33) und eine Boden- oder Deckenfläche (34) jeweils in rechten Winkeln aufeinanderstoßen, sind vier Streifen (2a,2b,2c,2d) so angeordnet, daß jeweils zwei gegen die Wandflächen (32,33) anlegbare Streifen (2a,2b) in ihrer Längsrichtung im rechten Winkel aufeinanderstoßen, während die beiden anderen, gegen die Boden- oder Deckenfläche (34) anlegbaren Streifen (2c,2d)in ihrer Längsrichtung in einer Gehrung aufeinanderstoßen und quer zu ihrer Längsrichtung jeweils unter Einschluß eines rechten Winkels an jeweils einen der beiden gegen die Wandflächen anlegbaren Streifen (2a,2b) anstoßen. Die feuchtigkeitsundurchlässigen Streifen sind dort, wo sie aneinanderstoßen, feuchtigkeitsdicht miteinander verbunden. Das Abdichtelement ist einstückig ausgebildet und weist mindestens einen mit einer feuchtigkeitsundurchlässigen Beschichtung versehenen Gewebe-, Gewirk- oder Fließmaterialzuschnitt auf. Das Gewebe-, Gewirk- oder Fließmaterial ist grobmaschig und weist reißfeste und/oder elastische Fasern auf. Der Gewebe-, Gewirk- oder Fließmaterialzuschnitt ist im wesentlichen bandförmig. Er weist eine geringe Stärke auf und ist mit Ausnahme eines umlaufenden Randstreifens mit der Beschichtung beidseitig versehen. Die Beschichtung besteht aus einem gummielastischen Material. Zur Herstellung des vorgefertigen Abdichtelementes wird ein rechteckiger Zuschnitt aus einem Gewebe-, Gewirk- oder Fließmaterial auf einer seiner Längsseiten mit einem Einschnitt oder Ausschnitt versehen. Anschließend wird der Zuschnitt auf mindestens einer Breitseitenfläche mit einem rechteckigen Kautschukstreifen belegt, der auf einer seiner Längsseiten mit einem Ausschnitt so versehen wird, daß dieser über dem Ein- oder Ausschnitt des Zuschnittes liegt. Dann wird der mit dem Kautschukstreifen belegte Zuschnitt in eine der gewünschten Gestalt des Abdichtelementes entsprechende Form vorgefaltet und schließlich wird der Kautschukstreifen in einer beheizbaren Form auf den Zuschnitt aufvulkanisiert.

## Beschreibung

Die Erfindung betrifft ein vorgefertigtes Abdichtelement zur Abdichtung von Ecken an Bauwerken im Innen- und/oder Außenbereich, in denen zwei Wandflächen und eine Boden- oder Deckenfläche jeweils in Winkeln aufeinanderstoßen, sowie ein Verfahren zur Herstellung eines derartigen vorgefertigten Abdichtelementes.

In Gebäuden ist es insbesondere im Sanitärbereich häufig erforderlich, Fugen oder Raumecken gesondert gegen Feuchtigkeit und/oder Wasser abzudichten, da das Mauerwerk oftmals in diesem Bereich Risse aufweist oder arbeitet. Eine individuelle dauerhafte Abdichtung der Raumecken erfordert dabei meist einen verhältnismäßig hohen Aufwand. Ensprechende Abdichtprobleme können auch außen an Bauwerken auftreten, beispielsweise beim Anschluß von Balkonen und Terassen an eine Hauswand.

Ausgehend hiervon liegt der Erfindung die Aufgabe zugrunde, ein vorgefertigtes Abdichtelement zu schaffen, das in seiner Form an die Raumecke angepaßt ist und eine dauerhafte Abdichtung gewährleistet, sowie ein Verfahren zu entwickeln, mit dem eine einfache Herstellung eines derartigen Abdichtelementes möglich ist.

Im Hinblick auf das Abdichtelement wird diese Aufgabe erfindungsgemäß dadurch gelöst, daß jeweils zwei gegen die Wandflächen anlegbare lotrechte Streifen und zwei gegen die Boden- oder Deckenfläche anlegbare waagerechte Streifen jeweils unter Einschluß eines Winkels, unter dem die Wandflächen aufeinanderstoßen, in ihrer Längsrichtung aneinanderstoßen, und jeweils zwei einander in ihren Längsrichtungen parallel verlaufende Streifen quer zu ihren jeweiligen Längsrichtungen jeweils unter Einschluß eines zwischen der jeweiligen Wandfläche und der Boden- bzw. Deckenfläche vorhandenen Winkels aneinanderstoßen, wobei sämtliche Streifen dort, wo sie aneinanderstoßen, wasserdicht miteinander verbunden sind.

Durch eine derartige Ausbildung wird ein Abdichtelement geschaffen, dessen Form genau der Form der Raumecke angepaßt ist, wodurch beim Anbringen des Abdichtelementes weder ein Zuschneiden noch ein Einpassen erforderlich ist. Die Raumecke kann als eine Innenecke oder als eine Außenecke ausgebildet sein. Das Abdichtelement kann je nach Erfordernis beispielsweise durch Festkleben oder Eingießen in der Raumecke befestigt und durch eine Fliesenauflage oder einen Schutzanstrich, beispielsweise aus Bitumen oder Epoxyd, ganz oder teilweise überdeckt werden.

Um auch in den an das Abdichtelement anschließenden Wandkanten eine vollständige Abdichtung zu gewährleisten, sieht eine vorteilhafte Ausgestaltung der Erfindung vor, daß sich an den Enden der beiden im rechten Winkel zueinander angeordneten Winkelschenkel des vorgefertigten einstückigen Abdichtelementes weitere streifenförmige Abdichtelemente anschließen können, die vorzugsweise mit ihren Enden unter oder über den Enden der Winkelschenkel liegen und mit diesen beispielsweise durch Verkleben wasserdicht verbunden sind.

Gemäß eine bevorzugten Ausgestaltung der Erfindung bestehen die Dichtstreifen aus einem mit einer wasserundurchlässigen Beschichtung versehenen Gewebe, Gewirke oder Vliesmaterial, welches zweckmäßig grobmaschig ausgebildet ist, so daß zum einen ein von der Raumseite her auf unbeschichtete Randbereiche des in die Raumecke eingelegten Abdichtelementes aufgetragener Klebstoff das Abdichtelement durchdringt und dessen Festkleben an den Wandflächen bewirkt, und daß sich zum anderen vorzugsweise beidseitig auf das Gewebe, Gewirke oder Vliesmaterial aufgebrachte Beschichtungen durch dasselbe hindurch verbinden können.

Gemäß einer weiteren vorteilhaften Ausgestaltung der Erfindung weist das Gewebe, Gewirke oder Vliesmaterial reißfeste und/oder elastische Fasern auf, so daß es bei einem Auftreten oder Aufweiten von Gebäuderissen aufgrund von Senkungen oder dergleichen nicht unter Beschädigung der Beschichtung einreißen kann. Aus dem gleichen Grund besteht die Beschichtung zweckmäßig aus einem elastischen Material, vorzugsweise aus natürlichem oder synthetischem Kautschuk.

Um eventuellen einseitigen Beschädigungen des Abdichtelementes durch vorspringende scharfe Kanten des Mauerwerks oder dergleichen vorzubeugen, ist das Gewebe, Gewirke oder Vliesmaterial gemäß einer weiteren vorteilhaften Ausgestaltung der Erfindung beidseitig beschichtet.

Zur Vereinfachung der Herstellung eines für Innenecken geeigneten Abdichtelementes und zur Verringerung der Herstellungskosten besteht das Gewebe, Gewirke oder Vliesmaterial zweckmäßig aus einem einzigen Zuschnitt, der an einer seiner Längsseiten, vorzugsweise in deren Mitte mit einem V-förmigen Ausschnitt versehen ist, wobei die Spitze des Ausschnittes nach Fertigstellung des Abdichtelementes im Bereich der sich in die Raumecke einfügenden Ecke des Abdichtelementes angeordnet ist.

Eine weitere bevorzugte Ausgestaltung der Erfindung sieht vor, daß die Beschichtung einen auf mindestens einer Breitseitenfläche des Zuschnittes aufvulkanisierten Kautschukstreifen umfaßt, der gemäß einer weiteren bevorzugten Ausgestaltung der Erfindung ebenfalls einstückig ausgebildet ist und vorzugsweise auch an einer seiner Längsseiten einen V-förmigen Ausschnitt aufweist. Um die Zugfestigkeit in Längsrichtung des Abdichtelementes im Bereich der Raumecke zu erhöhen, überlappen zweckmäßig die Ränder des Ausschnittes des Gewebe, Gewirke oder Vliesmaterialzuschnittes einander, während die Ränder des Ausschnittes des Kautschukstreifens vorteilhafterweise bündig aneinanderstoßen und durch das Vulkanisieren miteinander verbunden werden. Das Überlappen der Ränder des Ausschnittes im Gewebe, Gewirke oder Vliesmaterialzuschnitt wird gemäß einer weiteren vorteilhaften Ausgestaltung der Erfindung dadurch bewirkt, daß die Ränder des Ausschnittes unter einem Winkel zueinander angeordnet sind, der zwischen 45° und 90° liegt. Da die Überlappungsstellen vom Raum her nicht sichtbar sein sollten, sieht eine weitere vorteilhafte Ausgestaltung der Erfindung vor, daß einer der Ränder des Ausschnittes quer zur Längsrichtung des Zuschnittes verläuft, während der andere einen Winkel von 45° mit dieser Richtung einschließt. Der Teilbereich, der sich an den quer zur Längsrichtung des Zuschnittes verlaufenden Rand anschließt, kann in diesem Fall bei der Herstellung des Abdichtelementes während der Formgebung des mit dem Kautschukstreifen belegten Zuschnittes im Bereich der Gehrung umgeschlagen und gegen die später der Boden- oder Deckenfläche zugewandten Oberfläche desselben angelegt werden, während der unter einem Winkel von 45° zur Längsrichtung verlaufende Rand im Bereich der Gehrung gegen die dem Raum zugewandte Vorderseite des umgeklappten Teilbereichs anliegt.

Alternativ dazu ist es allerdings auch möglich, den Zuschnitt an einer seiner Längsseiten mit einem Einschnitt zu versehen, wobei die einander gegenüberliegenden Ränder des Einschnittes bei der Formgebung den Zuschnitt auf beiden Seiten der Gehrung überlappen. Wenn dabei die Ränder des Einschnittes während der Formgebung unter die aufgelegten Kautschukstreifen geschoben werden, so sind sie später ebenfalls nicht sichtbar.

Um beim Aufvulkanisieren des Kautschukstreifens im Bereich der Gehrung eine wasserdichte Verbindung zu gewährleisten, sollten sich die einander gegenüberliegenden Ränder des Ausschnittes des Kautschukstreifens nicht überlappen, so daß dessen V-förmiger Ausschnitt vorzugsweise einen Öffnungswinkel von 90° aufweist.

Lediglich mit einem Einschnitt an einer Längskante ist auch ein Zuschnitt aus Gewebe, Gewirke oder Vliesmaterial versehen, der zur Herstellung eines Abdichtelementes für eine Außenecke geeignet ist. Zweckmäßigerweise ist dieser Einschnitt in der Mitte der Längsseite vorgesehen, verläuft rechtwinklig zu dieser und ragt mit seinem der Längsseite abgewandten Ende ein wenig über eine sich durch den Zuschnitt erstreckende Längsachse heraus. Bei diesem Abdichtelement ragen die mit der Decke bzw. dem Boden zu verbindenden Streifen in eine von einem Innenraum abgewandte Richtung, der von den winklig zueinander angeordneten Streifen umschlossen ist.

Gemäß einer bevorzugten Ausführungsform der Erfindung sind die durch den Einschnitt voneinander getrennten Streifen durch ein Einsatzstück verbunden, das aus Gewebe, Gewirke oder Vliesmaterial besteht. Dieses Einsatzstück füllt eine Leerstelle aus, die nach einer Verformung des Zuschnittes zu einer Außenecke entsteht. Dadurch wird das für die Außenecke geeignete Abdichtelement lückenlos von einem Gewebe, Gewirke oder Vliesmaterial gehalten und besitzt eine gleichbleibend hohe Festigkeit über das gesamte Abdichtelement.

Das Einsatzstück besitzt zwei Schenkel von jeweils einer der Hälfte des Zuschnittes entsprechenden Breite. Diese Schenkel stoßen in einem Winkel aufeinander, der dem von den Wandstreifen gebildeten Winkel entspricht. Die Schenkel ragen mit ihren voneinander wegweisenden Enden auf die an den Boden- oder Deckenflächen zu befestigende Streifen. Diese werden miteinander verbunden und erhalten eine große Festigkeit gegen auftretende Verformungskräfte.

Gemäß einer weiteren bevorzugten Ausführungsform der Erfindung liegt auf dem Einsatzstück, das auf dem Kautschukstreifen angeordnet ist, eine Kautschukabdeckung. Diese Kautschukabdeckung bildet im Bereich der Leerstelle eine Verbindung zwischen den an der Boden- oder Deckenfläche anliegenden Streifen. Diese werden mit Hilfe der Kautschukabdeckung flüssigkeitsdicht miteinander verbunden.

Im Hinblick auf das Herstellungsverfahren wird die der Erfindung zugrundeliegende Aufgabe dadurch gelöst, daß dieses die folgende Schritte umfaßt:
a) Ein rechteckiger Zuschnitt aus einem Gewebe, Gewirke oder Vliesmaterial mit einer Länge von mindestens zwei in Längsrichtung aneinander gefügten Streifen und einer Breite von mindestens in Querrichtung aneinander gefügten Streifen wird auf einer seiner Längsseiten mit einem Ein- oder Ausschnitt versehen, der sich etwa bis zu einer sich durch den Zuschnitt erstreckenden Mittellinie erstreckt,
b) der Zuschnitt wird auf mindestens einer Breitseitenfläche mit einem rechteckigen, auf einem seiner Längsseiten mit einem Ein- oder Ausschnitt versehenen Kautschukstreifen belegt, so daß der Ausschnitt des Kautschukstreifens über dem Ein- oder Ausschnitt des Zuschnittes liegt,
c) der mit dem Kautschukstreifen belegte Zuschnitt wird unter Ausnutzung von Verbindungsrändern in eine der Gestalt des Abdichtelementes entsprechende Gestalt vorgefaltet,
d) der Kautschukstreifen wird in einer beheizbaren Form auf den Zuschnitt aufvulkanisiert.

Durch dieses Herstellungsverfahren können Abdichtelemente sowohl für Innen- als auch für Außenecken auf einfache und billige Weise hergestellt werden. Die mit diesem Herstellungsverfahren hergestellten Abdichtelemente sind einerseits sehr zerreißfest und andererseits in hohem Maße wasserdicht. Sie können im übrigen leicht auf die zu bewehrenden Ecken aufgebracht werden.

Dabei sieht eine vorteilhafte Ausgestaltung der Erfindung vor, daß der Zuschnitt beidseitig mit einem Kautschukstreifen belegt wird, dessen Dicke zweckmäßig vor dem Auflegen auf den Zuschnitt in einem Kalander auf eine Dicke von 0,2 bis 0,8 mm, vorzugsweise 0,4 mm ausgezogen wird und der anschließend zugeschnitten wird. Eine weitere vorteilhafte Ausgestaltung der Erfindung sieht vor, daß ein einseitig über eine Randbegrenzung des Ausschnittes des Kautschukstreifens überstehender Rand des Ein- oder Ausschnittes des Zuschnittes bei der Formgebung des mit dem Kautschukstreifen belegten Zuschnittes auf der gegenüberliegenden Seite des Ausschnittes auf eine vom Zuschnitt weg vorzugsweise auf die Wandfläche zu gerichtete Oberfläche des Kautschukstreifens aufgelegt oder unter eine auf den Zuschnitt zu gerichtete Oberfläche des Kautschukstreifens geschoben wird, so daß das Gewebe, Gewirke oder Vliesmaterial nach dem Vulkanisieren abgesehen von einem um das Abdichtelement umlaufenden Randstreifen nicht mehr sichtbar ist.

Das Aufvulkanisieren des Kautschukstreifens erfolgt gemäß einer weiteren vorteilhaften Ausgestaltung der Erfindung in einer Form mit einem ersten Formteil und einem zweiten, unter Schließen der Form gegen das erste Formteil anlegbaren zweiten Formteil, wobei die aneinander anliegenden Formteile einen Hohlraum umschließen, dessen Form der Form des fertiggestellten Abdichtelementes entspricht.

Zur Herstellung eines für eine Außenecke geeigneten Abdichtelementes wird nach dem Auflegen des Kautschukstreifens auf den Zuschnitt der Kautschukstreifen mit einem aus Gewebe, Gewirke oder Vliesmaterial bestehenden Einsatzstück belegt, mit dem eine beim Falten des Zuschnittes und des Kautschukstreifens im Bereich des Ein- oder Ausschnittes zwischen einander benachbarte Hälften des Zuschnittes entstehende Leerstelle bedeckt wird. Dieses Einsatzstück bildet eine einfach einzufügende sehr dauerhafte und hochfeste Möglichkeit, die durch den Einschnitt voneinander getrennten Begrenzungen der einander benachbarten Hälften des Zuschnittes miteinander zu verbinden.

Gemäß einer weiteren bevorzugten Ausführungsform der Erfindung wird das Einsatzstück vor dem Falten des Rohlings auf dem Kautschukstreifen im Bereich eines Streifens an einem aufliegenden Teil befestigt und der übrige Teil des Einsatzstücks wird beim Falten des Rohlings gegenüber diesem Teil so bewegt, bis der andere Schenkel auf die andere Hälfte des Zuschnittes ragt und die Leerstelle vom Einsatzstück bedeckt ist. Durch diesen Verfahrensschritt kann der Rohling bereits vor seinem Falten völlig fertiggestellt werden, so daß nur noch die maschinell durchgeführte Verformung des Rohlings notwendig ist. Dadurch kann das Abdichtelement auf billige, einfache und sehr genaue Weise hergestellt werden.

Im folgenden wird die Erfindung anhand eines in der Zeichnung dargestellten Ausführungsbeispiels näher erläutert. Es zeigen:

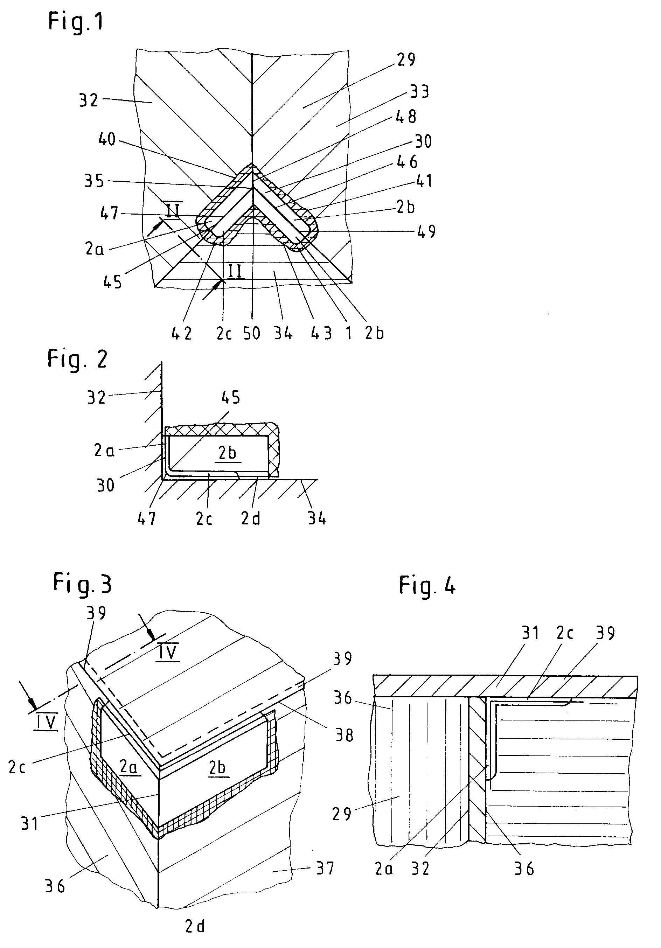

- Fig. 1:: Eine perspektivische Darstellung einer auf eine Innenecke aufgebrachten Abdichtung,
- Fig. 2:: eine Ansicht auf eine Innenecke gemäß der Richtung II-II in Figur 1,
- Fig. 3:: eine perspektivische Darstellung einer auf einer Außenecke aufgebrachten Abdeckung,
- Fig. 4:: eine Seitenansicht einer auf einer Außenecke aufgebrachten Abdichtung gemäß der Sichtrichtung IV-IV in Figur 3,
- Fig. 5:: Eine perspektivische Ansicht eines fertigen Abdichtelementes,
- Fig. 6:: eine Draufsicht auf einen Gewebezuschnitt für das Abdichtelement der Figur 5,
- Fig. 7:: eine Draufsicht auf einen Kautschukstreifen vor dem Aufvulkanisieren auf den Gewebezuschnitt der Figur 6,
- Fig. 8:: eine Seitenansicht eines positiven Formteils einer beheizbaren Form,
- Fig. 9:: eine Seitenansicht eines negativen Formteils der beheizbaren Form,
- Fig. 10:: eine Vorderseitenansicht des positiven Formteils,
- Fig. 11:: eine Draufsicht auf einen Zuschnitt zur Herstellung einer Abdichtung für eine Außenecke,

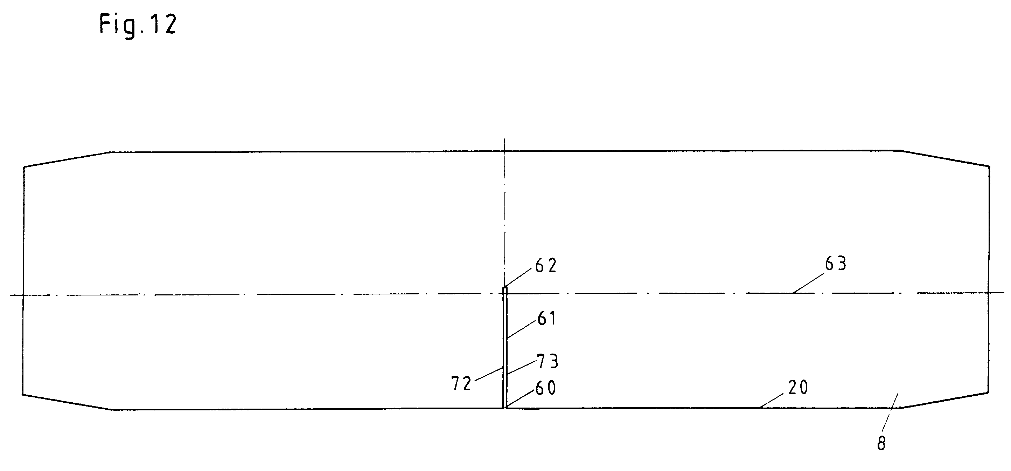

- Fig. 12:: eine Draufsicht auf einen Kautschukstreifen zur Herstellung eines Abdichtelementes für eine Außenecke,
- Fig. 13:: eine Draufsicht auf ein Einsatzstück für die Herstellung eines Abdichtelementes für eine Außenecke,
- Fig. 14:: eine Draufsicht auf eine Kautschukabdeckung zur Herstellung einer Abdichtung für eine Außenecke,
- Fig. 15:: eine Draufsicht auf einen rechtwinklig verformten Zuschnitt zur Herstellung einer Abdichtung für eine Außenecke,
- Fig. 16:: eine Draufsicht auf einen mit einem Einsatzstück bedeckten rechtwinklig verformten Zuschnitt,
- Fig. 17:: eine Draufsicht auf einen mit einem Einsatzstück und Kautschukstreifen belegten rechtwinklig verformten Zuschnitt,
- Fig. 18:: eine Draufsicht auf einen rechtwinklig verformten Zuschnitt, auf den ein Einsatzstück, zwei Kautschukstreifen und eine Kautschukabdeckung aufgelegt ist und

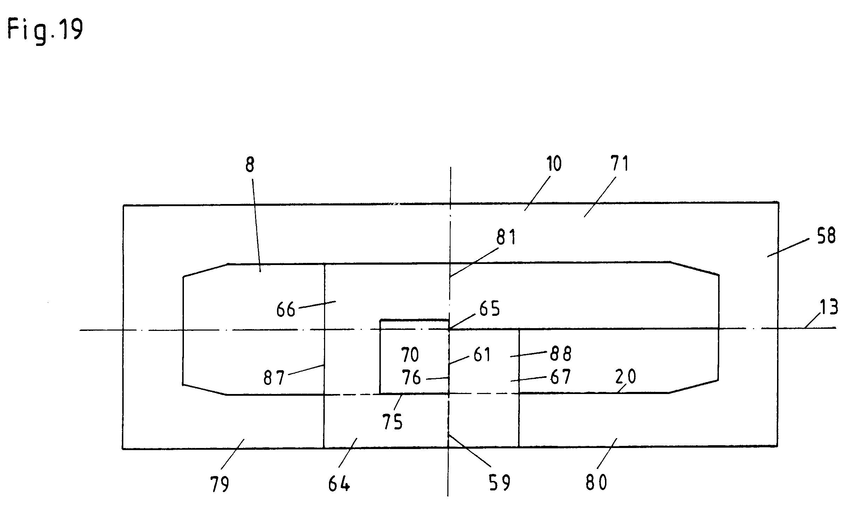

- Fig. 19:: eine Draufsicht auf einen Rohling, bestehend aus einem Zuschnitt, einem Kautschukstreifen, einem Einsatzstück und einer Kautschukabdeckung.

Ein Abdichtelement 1 dient zur Abdichtung von innerhalb eines Raumes 29 liegenden Innenecken 30 oder von außerhalb eines Raumes 29 liegenden Außenecken 31. Bei den Innenecken 30 stoßen zwei Innenwandflächen 32, 33 und eine Bodenfläche 34 oder eine Deckenfläche in einem vorgegebenen Winkel 35 aufeinander. Im Falle einer Außenecke 31 stoßen zwei Außenflächen 36, 37 und eine Bodenfläche oder Deckenfläche 38 aneinander. Die Deckenfläche 38 überkragt in eine vom Raum 29 abgewandte Richtung mit einem Deckenteil 39 die Außenflächen 36, 37. Die Innenecken 30 und die Außenecken 31 können auch zur Abdichtung von außerhalb eines Bauwerkes vorhandenen Ecken verwendet werden, beispielsweise zur Abdichtung von Ecken, die von waagerechten Flächen bei ihrer Einmündung in Gebäudeaußenflächen entstehen.

Das Abdichtelement für eine Innenecke 30 weist vier Streifen 2a, 2b, 2c, 2d auf, die so angeordnet sind, daß jeweils zwei mit ihren äußeren Oberflächen 40, 41 gegen die Flächen 32, 33 anlegbare streifen 2a, 2b in ihrer Längsrichtung im rechten Winkel 35 aneinanderstoßen, während die beiden anderen mit ihren äußeren Oberflächen 42, 43 gegen die Bodenfläche 34 anlegbare Streifen 2c, 2d in ihrer Längsrichtung in einer Gehrung 4 mit ihren schrägen Schmalseiten 44 aneinanderstoßen und quer zu ihrer Längsrichtung jeweils unter Einschluß eines rechten Winkels 44, 45 an jeweils einen der beiden Streifen 2a, 2b anstoßen, wobei die wasserundurchlässigen Streifen 2a, 2b, 2c, 2d im Bereich ihrer jeweiligen Stoßstellen 47, 48, 49, 50 wasserdicht miteinander verbunden sind.

Das einstückige Abdichtelement 1 besteht im wesentlichen aus einem langgestreckten, rechteckigen Band 7, auf dessen beiden entgegengesetzten Breitseitenflächen jeweils ein wasserundurchlässiger Kautschukstreifen 8 aufvulkanisiert ist. Das Band 7 besteht vorzugsweise aus einem dünnen, grobmaschigen Gewebe oder Gewirk aus reißfesten, elastischen Fasern, wobei die Längen- und Breitenabmessungen des Bandes 7 etwas größer als die der deckungsgleich übereinanderliegenden, ebenfalls rechteckigen Kautschukstreifen 8 sind, so daß ein unbeschichteter umlaufender Randstreifen 10 frei bleibt, der etwas schmaler als die halbe Breite eines Kautschukstreifens 8 ist. Die Länge der Streifen 2a, 2b, 2c, 2d des Abdichtelementes 1 ist vorzugsweise zwei bis dreimal so groß wie ihre Breite, die zweckmäßig etwa 35 bis 40 mm beträgt. Die Gesamtstärke des Abdichtelementes liegt vorzugsweise unter 2 mm, so daß es sich gut an Unebenheiten anschmiegt. Das bevorzugt aus einem Arkoflex(eingetragenes Warenzeichen in der BRD) Gewirk bestehende Band 7 und das Material der Kautschukstreifen 8 sind so gewählt, daß sich die beiden Kautschukstreifen beim Aufvulkanisieren durch das grobmaschige Band hindurch miteinander verbinden.

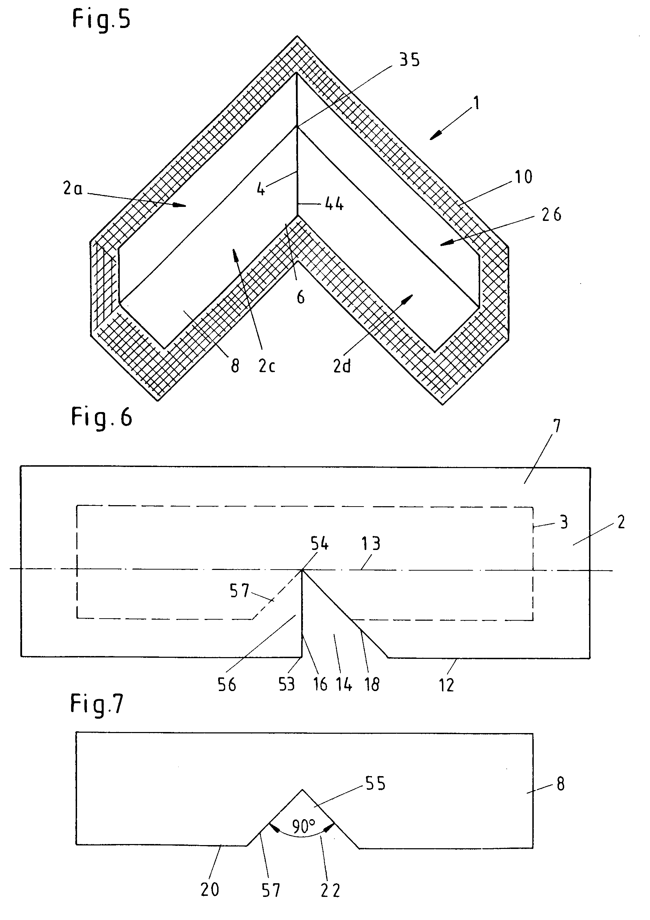

Wie in Figur 6 dargestellt, wird das Band 7 so in einen Zuschnitt 6 zugeschnitten, daß es an einer seiner Längsseiten 12 mit einem bis zu einer Mittellinie 13 des Zuschnittes 6 reichenden V-förmigen Ausschnitt 14 versehen ist, der durch zwei Ränder 16, 18 begrenzt wird, von denen der eine 16 von einer Mitte 53 der Längsseite 12 quer zur Längsrichtung des Zuschnittes 6 bis zu einem auf der Mittellinie 13 liegenden Punkt 54 verläuft, während der andere von der Längsseite 12 unter einem Winkel von 135° bis zum Punkt 54 verläuft.

Demgegenüber ist der in Figur 7 dargestellten Kautschukstreifen 8 auf seiner Längsseite 20 zwar ebenfalls mit einem V-förmigen Ausschnitt 22 versehen, wobei der Ausschnitt 22 dort jedoch spiegelsymmetrisch ausgebildet ist und am inneren Ende einen Öffnungswinkel 55 von 90° aufweist. Dieser ist damit doppelt so groß wie derjenige des Ausschnittes 14 des Gewebezuschnittes 6. Statt eines Öffnungswinkels 55 von 90° kann der Öffnungswinkel 55 auch eine andere Größe besitzen, die sich nach der Größe desjenigen Winkels 35 richtet, der von den Innenflächen 32,33 eingeschlossen wird, auf denen die Streifen 2a, 2b haften.

Die Ausschnitte 14, 22 des Zuschnittes 6 bzw. der Kautschukstreifen 8 sind so angeordnet, daß ihre Spitzen nach dem Auflegen der Kautschukstreifen 8 auf den Zuschnitt 6 genau übereinanderliegen. Bei fertiggestelltem Abdichtelement 1 befindet sich an dieser Stelle der der Innenecke 30 zugewandte Winkel 35 des Abdichtelementes 1, an dem dessen den Innenwandflächen 32, 33 und der Bodenfläche 34 oder Deckenfläche zugewandte äußere Oberflächen 40, 41, 42, 43 aneinanderstoßen.

Zur Herstellung des Abdichtelementes 1 wird der in Figur 6 dargestellte Zuschnitt 6 beidseitig mit den in Figur 7 dargestellten Kautschukstreifen 8 belegt, die zuvor in einem Kalander auf eine Stärke von etwa 0,4 mm ausgezogen und dann zugeschnitten worden waren. Der Zuschnitt 6 und die Kautschukstreifen 8 werden dann entsprechend der Form der Raumecke, wie in Figur 5 dargestellt, vorgefaltet. Beim vorgefalteten Zuschnitt 6 liegt der Rand 18 auf einer vom Rand 16 begrenzten Auflagefläche 56 auf, die vom Rand 16 begrenzt wird und an den Ausschnitt 14 grenzt. Dabei verläuft beim vorgefalteten Zuschnitt 6 der Rand 18 entlang einer ihm gegenüberliegenden Kante 57 des V-Ausschnittes 22. Die Auflagefläche 56 kann entweder zwischen dem Zuschnitt 6 und einer der beiden Kautschukstreifen 8 angeordnet sein, oder auf einem der beiden Kautschukstreifen 8 aufliegen.

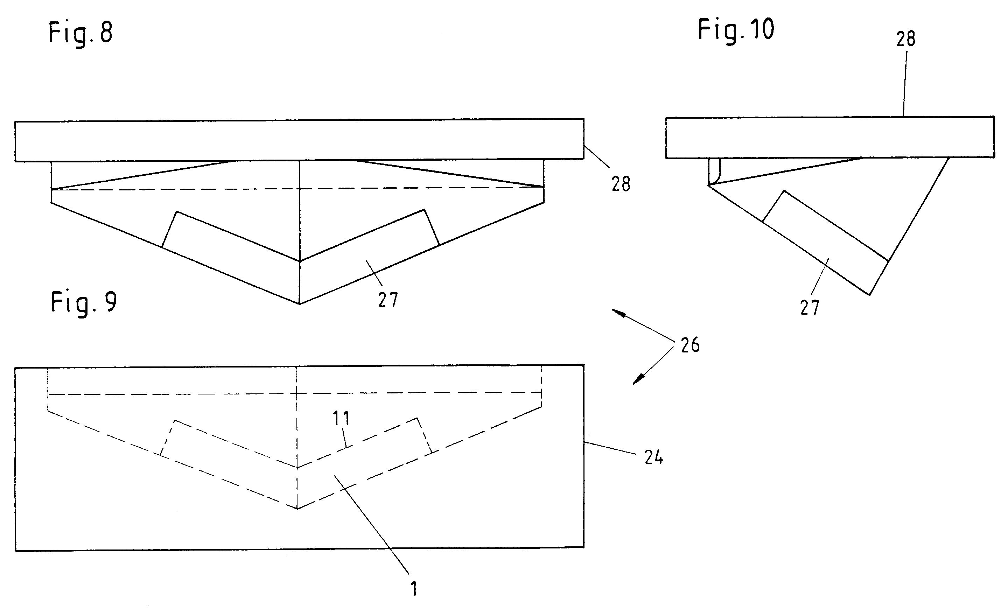

Das vorgefaltete Abdichtelement 1 wird in ein negatives Formteil 24 einer beheizbaren Form 26 paßgenau eingelegt, so daß sich das Abdichtelement 1 entsprechend der gezeigten unterbrochenen Linie 11 in Figur 9 darstellt. Anschließend wird ein positives Formteil 28 mit dem negativen Formteil 24 an aufeinanderzu gerichteten Anlageflächen 27 zur Anlage gebracht.

Nachdem die Form 26 um den mit dem Kautschukstreifen 8 belegten Zuschnitt 6 herum geschlossen ist, wird sie beheizt, bis die Kautschukstreifen 8 ausvulkanisiert und fest miteinander sowie mit dem Zuschnitt 6 verbunden sind. Nach einer entsprechenden Heizzeit werden die beiden Formteile 24, 28 voneinander gelöst, und das fertiggestellte Abdichtteil 1 entnommen.

Ein Abdichtelement 1 für eine Außenecke 31 besteht ähnlich wie das Abdichtelement 1 für eine Innenecke 30 aus vier Streifen 2a, 2b, 2c, 2d, die wasserundurchlässig miteinander verbunden sind. Auch das für die Außenecke 31 vorgesehene Abdichtelement 1 ist im wesentlichen einstückig ausgebildet. Als Träger ist ein langgestrecktes, rechteckiges Band 7 vorgesehen, auf dessen beiden entgegengesetzten Breitseitenflächen jeweils ein wasserundurchlässiger Kautschukstreifen 8 aufvulkanisiert ist.

Dieser Kautschukstreifen 8 ist in seinen Abmaßen um einen Randstreifen 10 kleiner als das Band 7 aus Gewebe, Gewirke oder Vliesmaterial. Der umlaufende Randstreifen 10 bleibt daher nach dem Aufvulkanisieren des Kautschukstreifens 8 frei. Er ist etwas schmaler als die halbe Breite des Kautschukstreifens 8.

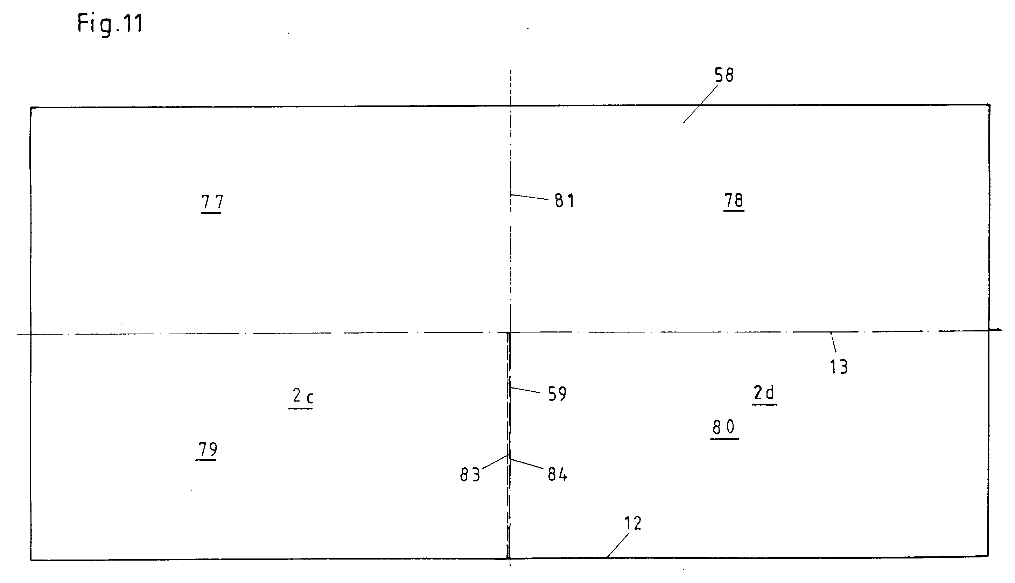

Wie in Figur 11 dargestellt ist, wird das Band 7 so zu einem Zuschnitt 58 zugeschnitten, daß es an einer seiner Längsseiten 12 mit einem über die Mittellinie 13 etwas hinausragenden Einschnitt 59 versehen wird. In gleicher Weise wird der Kautschukstreifen 8 etwa in Höhe der Mitte 60 seiner Längsseite 20 mit einem Einschnitt 61 versehen, der mit seinem der Längsseite 20 gegenüberliegenden Ende 62 ein kleines Stück jenseits einer Mittellinie 63 des Kautschukstreifens 8 liegt. Auf diese Weise können der Zuschnitt 58 und der Kautschukstreifen 8 bezüglich ihrer Einschnitte 59, 61 gegeneinander ausgerichtet werden.

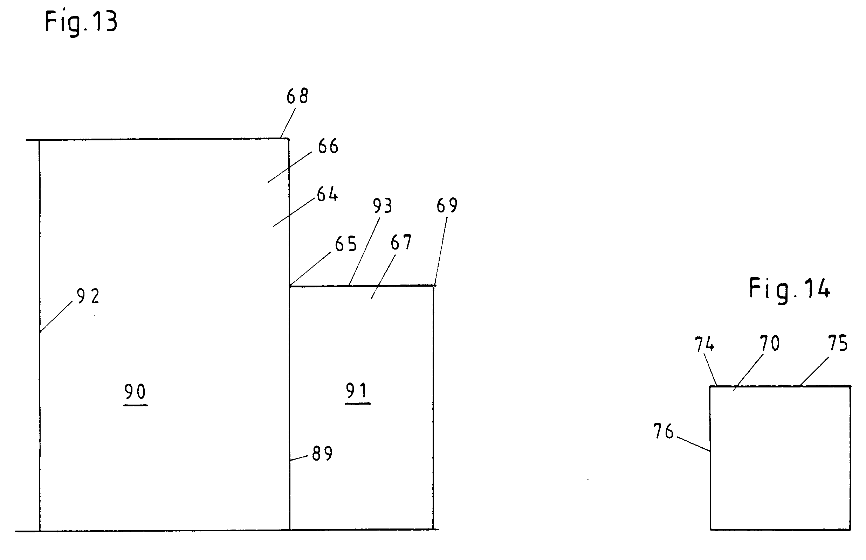

Auf dem Kautschukstreifen 8 wird zusätzlich ein Einsatzstück 64 befestigt, das in Figur 13 dargestellt ist. Es besteht aus zwei in einem Winkel 65 zusammenstoßenden Schenkeln 66, 67. Die Breite dieser Schenkel 66, 67 entspricht der halben Breite eines Zuschnittes 6. Der Winkel 65 entspricht demjenigen Winkel, unter dem die Außenflächen 36, 37 aufeinanderstoßen, auf denen das Abdichtelement mit seinen Streifen 2a, 2b, befestigt werden soll. Im Regelfall wird dieser Winkel 65 eine Größe von 90° haben.

Die Schenkel 66, 67 ragen mit ihren Enden 68, 69 soweit vor, daß sie nach der Vorfaltung des Abdichtelementes 1 jeweils auf die einander benachbarten Streifen 2c, 2d ragen, die mit der Bodenfläche oder Deckenfläche 38 verbunden sind. Auf diese Weise werden die durch den Einschnitt 59 voneinander getrennten Streifen 2c, 2d wieder miteinander verbunden und erhalten eine sie gegenseitig stabilisierende Festigkeit.

Darüber hinaus ist eine Kautschukabdeckung 70 auf dem Einsatzstück 64 befestigt. Diese Kautschukabdeckung 70 besteht aus einem Quadrat, dessen Kantenlänge der Breite entspricht, die der Kautschukstreifen 8 im Bereich eines Streifens 2c, 2d besitzt. Die Kautschukabdeckung 70 wird auf dem Einsatzstück 64 so befestigt, daß sie in der Lage ist, nach dem Vorfalten eines aus dem Zuschnitt 6 und dem Kautschukstreifen 8 bestehenden Rohlings 71 die im Bereich des Einschnittes 61 voneinander abstehenden Seitenbegrenzungen 72, 73 miteinander zu verbinden. Insofern liegt die Kautschukabdeckung 70 mit einer ihrer Ecken 74 nach dem Vorfalten des Rohlings 71 im Scheitelpunkt des Winkels 65 an. Einander benachbarte Kanten 75, 76 der Ecke 74 verlaufen parallel zu den Seitenbegrenzungen 72, 73, die den Kautschukstreifen 8 im Bereich des Einschnittes 61 begrenzen. Beim Aufvulkanisieren verbinden sich die Kanten 75, 76 mit den Seitenbegrenzungen 72, 73, so daß das Abdichtelement 1 im Bereich seiner Streifen 2c, 2d eine durchgehende Kautschukbeschichtung aufweist.

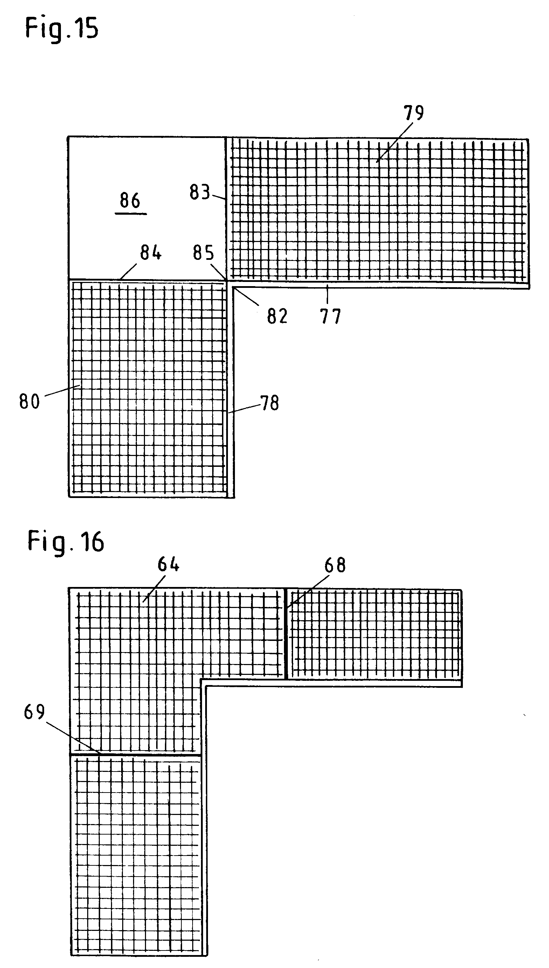

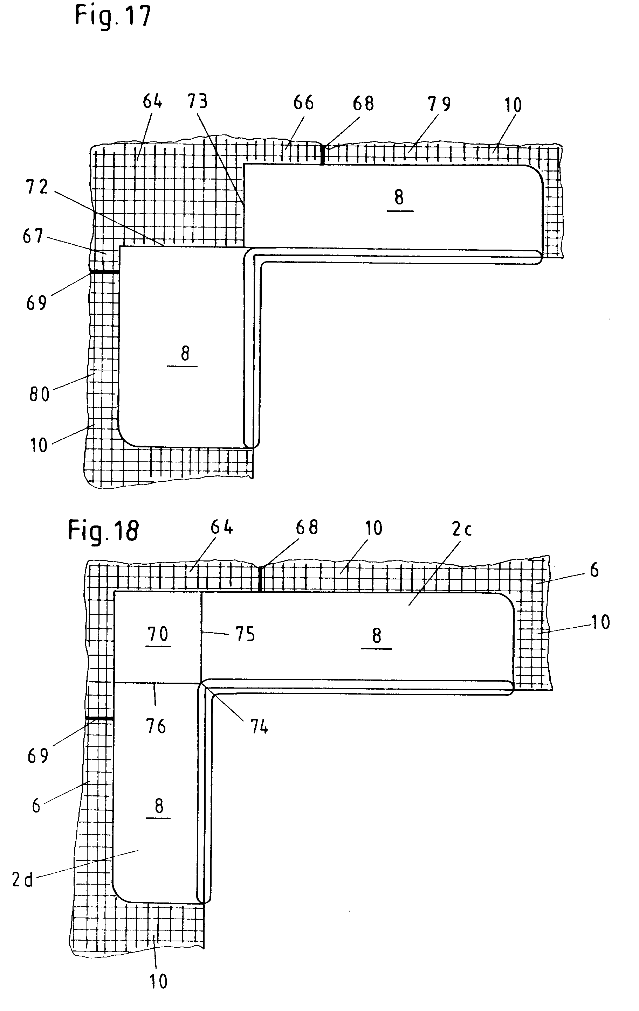

Die einzelnen Stadien der Vorbereitung auf den Vulkanisierungsvorgang werden in den Figuren 15 bis 18 dargestellt. Nachdem zunächst ein Zuschnitt 58 durch Vornahme des Einschnittes 59 aus dem Band 7 hergestellt wird, wird anschließend ein oberhalb des Einschnittes 59 von der Mittellinie 13 begrenzter Teil entlang der Mittellinie entsprechend einem Winkel gefaltet, der dem Winkel zwischen den Außenflächen 36, 37 und der Deckenfläche 38 entspricht. Auf diese Weise entstehen an den Außenflächen 36, 37 befestigbare lotrechte Teile 77, 78 und an der Deckenfläche 38 befestigbare waagerechte Teile 79, 80. Sodann werden die lotrechten Teile 77, 78 entlang einer Verlängerung 81 um einen Winkel 82 gefaltet, der dem zwischen den Außenflächen 36, 37 aufgespannten Winkel entspricht. Dadurch entfernen sich die durch den Einschnitt 59 entstandenen, einander benachbarten Begrenzungen 83, 84 der waagerechten Teile 79, 80 voneinander und bilden einen dem Winkel 82 entsprechenden Winkel 85. Dadurch entsteht eine Leerstelle 86, die von dem Band 7 nicht ausgefüllt ist.

Figur 16 zeigt, wie diese Leerstelle 86 vom Einsatzstück 64 abgedeckt wird, dessen Schenkel 66, 67 auf die waagerechten Teile 79, 80 übergreift. Dabei verlaufen die Enden 68, 69 parallel zu den Begrenzungen 83, 84 auf den waagerechten Teilen 79, 80. Der Winkel 65 entspricht dem Winkel 85, der zwischen den Begrenzungen 83, 84 aufgespannt ist.

Nachdem in entsprechender Weise der Kautschukstreifen 8 mit dem Einschnitt 61 versehen und vorgefaltet worden ist, wird dieser auf die waagerechten Teile 79, 80 aufgelegt. Dabei steht der Rand 10 über den Kautschukstreifen 8 hinaus. Die Seitenbegrenzungen 72, 73 verlaufen in etwa parallel zu den Enden 68, 69 der Schenkel 66, 67 und ragen auf diese über.

Zwischen den Seitenbegrenzungen 72, 73 des Einschnittes 61 ist das Einsatzstück 64 frei von dem Kautschukstreifen 8. In diesem Bereich wird sodann die Kautschukabdeckung 70 so aufgelegt, daß diese mit ihren Kanten 75, 76 den Seitenbegrenzungen 72, 73 des Kautschukstreifens 8 benachbart ist. Dabei liegt die Ecke 74 der Kautschukabdeckung 70 unmittelbar im Bereich des von den Kanten 75, 76 aufgespannten Winkels.

In diesem Zustand wird der Rohling in eine entsprechende Form eingebracht und vulkanisiert. Auf diese Weise erhält er eine Ausbildung, die geeignet ist, flach an eine Außenecke 31 angepaßt zu werden. Die zunächst unverbunden einander benachbarten Kanten, beispielsweise im Bereich der Kautschukabdeckung 70, sind wasserdicht miteinander verbunden. Darüber hinaus ist der Kautschukstreifen 8 und die Kautschukabdeckung 70 fest mit dem Trägermaterial des Zuschnittes 6 und des Einsatzstückes 64 verbunden.

Zweckmäßigerweise wird diese Verformung vorgenommen, nachdem zuvor die einzelnen Teile in einem Rohling 71 zusammengelegt worden sind. Zu diesem Zwecke wird zunächst durch Vornahme des Einschnittes 59 der Zuschnitt 58 hergestellt. In entsprechender Weise wird der Einschnitt 61 im Kautschukstreifen 8 hergestellt. Der Kautschukstreifen 8 und der Zuschnitt 58 werden bezüglich ihrer Einschnitte 59, 61 gegenseitig ausgerichtet, so daß der Kautschukstreifen 8 bis auf den freibleibenden Rand 10 auf dem Zuschnitt 58 aufliegt.

Sodann wird das Einsatzstück 64 auf den Kautschukstreifen 8 aufgelegt, und zwar in der Weise, daß einer der beiden Schenkel 66 mit seiner dem Winkel 65 gegenüberliegenden Begrenzung 87 senkrecht zur Mittellinie 13 des Zuschnittes 58 verläuft, während der andere Schenkel 67 sich über den Einschnitt 59, 61 hinaus vom waagerechten Teil 79 auf das waagerechte Teil 80 erstreckt. Dabei liegt der Winkel 65 im Schnittpunkt des Einschnittes 59, 61 mit der Mittellinie 13.

Um ein Verschieben des Einsatzstückes 64 bezüglich des Kautschukstreifens 8 zu verhindern, wird das Einsatzstück 64 in einem auf dem Kautschukstreifen 8 aufliegenden Teil 88 vorsichtig mit dem Kautschukstreifen 8 verbunden, und zwar durch Anwendung von Druck mit Hilfe eines Schonhammers. Auf diese Weise liegt das Einsatzstück 64 im Bereich des aufliegenden Teils 88 bezüglich des Kautschukstreifens 8 fest, während die übrigen Teile des Einsatzstückes 64 bezüglich des Kautschukstreifens 8 unbefestigt sind.

Schließlich wird die Kautschukabdeckung 70 auf das Einsatzstück 64 aufgelegt, und zwar in der Weise, daß eine Kante 76 entlang dem Einschnitt 61 verläuft, während die senkrecht dazu verlaufende Kante 75 der Kautschukabdeckung 70 entlang der Längsseite 20 des Kautschukstreifens 8 verläuft, und zwar im Bereich des Schenkels 66, dessen Begrenzung 87 rechtwinklig zur Mittellinie 13 verläuft.

Nachdem zunächst eine Faltung des Rohling 71 um die Mittellinie 13 vorgenommen worden ist, kann sodann eine Faltung entlang der Verlängerung 81 vorgenommen werden. Dabei verschwenken die waagerechten Teile 79, 80 im Bereich des Einschnittes 59 gegeneinander. Aufgrund der Befestigung des Einsatzstückes 64 im Bereich des aufliegenden Teils 88 wird das Einsatzstück 64 mit dem waagerechten Teil 80 gegenüber dem waagerechten Teil 79 verschwenkt, bis der auf dem waagerechten Teil 79 verlaufende Schenkel 66 des Einsatzstückes 64 die in Figur 16 dargestellte Lage eingenommen hat. In dieser Lage füllt das Einsatzstück 64 die Leerstelle 86 aus und gleichzeitig liegt die Kautschukabdeckung 70 unmittelbar zwischen den Seitenbegrenzungen 72, 73 des Kautschukstreifens 8. Der auf diese Weise vorgefaltete Rohling 71 kann unmittelbar in einer entsprechend ausgestalteten beheizbaren Form 26 zu dem Abdichtelement 1 gepreßt werden.

## Patentansprüche

1. Vorgefertigtes Abdichtelement zum Abdichten von Ecken an Bauwerken im Innen- und/oder Außenbereich, in denen zwei Wandflächen und eine Boden- oder Deckenfläche jeweils in Winkeln aufeinanderstoßen, dadurch gekennzeichnet, daß jeweils zwei gegen die Wandflächen anlegbare lotrechte Streifen (2a, 2b) und zwei gegen die Boden- oder Deckenflächen (34, 38) anlegbare waagerechte Streifen (2c, 2d) jeweils unter Einschluß eines Winkels, unter dem die Wandflächen in ihrer Längsrichtung aufeinanderstoßen, und jeweils zwei einander in ihren Längsrichtungen parallel verlaufende Streifen (2a, 2c; 2b, 2d) quer zu ihren jeweiligen Längsrichtungen jeweils unter Einschluß eines zwischen der jeweiligen Wandfläche und der Boden- oder Deckenfläche (34, 38) vorhandenen Winkels (45, 46) aneinanderstoßen, wobei sämtliche Streifen (2a, 2b, 2c, 2d) dort, wo sie aneinanderstoßen, wasserdicht miteinander verbunden sind.

2. Abdichtelement nach Anspruch 1, dadurch gekennzeichnet, daß es einstückig ausgebildet ist.

3. Abdichtelement nach Anspruch 1 oder 2, gekennzeichnet durch mindestens einen mit einer wasserundurchlässigen Beschichtung versehenen Zuschnitt (6) aus Gewebe, Gewirke oder Vliesmaterial.

4. Abdichtelement nach Anspruch 3, dadurch gekennzeichnet, daß das Gewebe, Gewirke oder Vliesmaterial grobmaschig ist.

5. Abdichtelement nach Anspruch 3 oder 4, dadurch gekennzeichnet, daß das Gewebe, Gewirke oder Vliesmaterial reißfeste und/ oder elastische Fasern aufweist.

6. Abdichtelement nach einem der Ansprüche 3 bis 5, dadurch gekennzeichnet, daß der Zuschnitt (6) aus Gewebe, Gewirke oder Vliesmaterial im wesentlichen bandförmig ist.

7. Abdichtelement nach einem der Ansprüche 3 bis 6, dadurch gekennzeichnet, daß das Gewebe, Gewirke oder Vliesmaterial eine geringe Stärke von 0,5 bis 1,5 mm aufweist.

8. Abdichtelement nach einem der Ansprüche 3 bis 7, dadurch gekennzeichnet, daß der Zuschnitt (6) aus Gewebe, Gewirke oder Vliesmaterial (6) beidseitig beschichtet ist.

9. Abdichtelement nach einem der Ansprüche 3 bis 8, dadurch gekennzeichnet, daß der Zuschnitt (6) aus Gewebe, Gewirke oder Vliesmaterial mit Ausnahme eines umlaufenden Randstreifens (10) mit der Beschichtung versehen ist.

10. Abdichtelement nach einem der Ansprüche 1 bis 9, dadurch gekennzeichnet, daß die Beschichtung aus einem gummielastischen Material besteht.

11. Abdichtelement nach Anspruch 10, dadurch gekennzeichnet, daß die Beschichtung aus Kautschuk besteht.

12. Abdichtelement nach einem der Ansprüche 3 bis 11, dadurch gekennzeichnet, daß es einen einzigen Zuschnitt (6) aus Gewebe, Gewirke oder Vliesmaterial aufweist.

13. Abdichtelement nach einem der Ansprüche 3 bis 12, dadurch gekennzeichnet, daß der Zuschnitt (6) aus Gewebe, Gewirke oder Vliesmaterial an einer seiner Längsseiten (12) mit einem Ausschnitt (14) versehen ist.

14. Abdichtelement zum Aufbringen auf eine Innenecke nach Anspruch 13, dadurch gekennzeichnet, daß der Ausschnitt (14) V-förmig ausgebildet ist.

15. Abdichtelement für eine Innenecke nach Anspruch 14, dadurch gekennzeichnet, daß der Ausschnitt (14) durch Ränder (16, 18) begrenzt ist, die unter einem Winkel aufeinandertreffen, der zwischen 45 und 90° liegt.

16. Abdichtelement für eine Innenecke nach Anspruch 15, dadurch gekennzeichnet, daß die Ränder (16, 18) im Bereich einer Mittellinie (13) des Zuschnittes (6) aufeinandertreffen.

17. Abdichtelement für eine Innenecke nach Anspruch 15 oder 16, dadurch gekennzeichnet, daß einer der Ränder (16) quer zur Längsrichtung des Zuschnittes (6) und der andere (18) unter einem Winkel von 45° zur Längsrichtung verläuft.

18. Abdichtelement für eine Innenecke nach Anspruch 14, dadurch gekennzeichnet, daß der Zuschnitt (6) an einer seiner Längsseiten (12) mit einem Ausschnitt (14) versehen ist.

19. Abdichtelement für eine Innenecke nach Anspruch 18, dadurch gekennzeichnet, daß der Einschnitt bis zu einer Mittellinie (13) des Zuschnittes (6) verläuft.

20. Abdichtelement nach einem der Ansprüche 3 bis 19, dadurch gekennzeichnet, daß die Beschichtung mindestens einen auf eine Seite des Zuschnittes (6) aus Gewebe, Gewirke oder Vliesmaterial aufvulkanisierten Kautschukstreifen (8) umfaßt.

21. Abdichtelement nach Anspruch 20, dadurch gekennzeichnet, daß ein einstückiger Kautschukstreifen (8) auf mindestens einer Breitseitenfläche des Zuschnittes (6) aus Gewebe, Gewirke oder Vliesmaterial aufvulkanisiert ist.

22. Abdichtelement nach Anspruch 20 oder 21, dadurch gekennzeichnet, daß auf beide Breitseitenflächen des Zuschnittes (6) jeweils ein einstückiger Kautschukstreifen (8) aufvulkanisiert ist.

23. Abdichtelement nach einem der Ansprüche 20 bis 22, dadurch gekennzeichnet, daß der Kautschukstreifen (8) eine geringere Breite und Länge als der Zuschnitt (6) aus Gewebe, Gewirke oder Vliesmaterial aufweist.

24. Abdichtelement nach einem der Ansprüche 20 bis 23, dadurch gekennzeichnet, daß der Kautschukstreifen (8) an einer seiner Längsseiten (20) einen V-förmigen Ausschnitt (22) aufweist, dessen Ränder (57) unter einem Öffnungswinkel (55) von 90° aufeinandertreffen.

25. Abdichtelement nach einem der Ansprüche 20 bis 24, dadurch gekennzeichnet, daß der Kautschukstreifen (8) so auf dem Zuschnitt (6) angeordnet ist, daß die Ränder (18) der jeweiligen Ausschnitte (14, 22) an einer Seite übereinanderliegen.

26. Abdichtelement nach Anspruch 25, dadurch gekennzeichnet, daß die übereinanderliegenden Ränder (18) mit der Längsrichtung des Zuschnittes (6) und des Kautschukstreifens (8) einen Winkel von 45° einschließen.

27. Abdichtelement nach Anspruch 25 oder 26, dadurch gekennzeichnet, daß einer der Ränder (16) des im Zuschnitt (6) vorgesehenen Ausschnittes (14) über den entsprechenden Rand (57) des Ausschnittes (22) übersteht.

28. Abdichtelement nach Anspruch 27, dadurch gekennzeichnet, daß der überstehende Rand (16) bei fertiggestelltem Abdichtelement (1) mindestens teilweise auf die auf die Boden- oder Deckenfläche (34, 38) zu gerichtete Oberfläche eines auf einer Außenseite des Zuschnittes (6) aufvulkanisierten Kautschukstreifens (8) einvulkanisiert ist und dabei die dem Ausschnitt (22) beidseits benachbarten Streifen (2c, 2d) eine Auflagefläche für die Boden- oder Deckenflächen (34, 38) bilden, die in einem vorgegebenen Winkel von den an den Wandflächen anliegenden Streifen (2a, 2b) in Richtung eines von den Streifen (2a, 2b, 2c, 2d) umschlossenen Innenraumes abstehen.

29. Abdichtelement zum Aufbringen auf eine Außenecke nach einem der Ansprüche 1 bis 12, 18 bis 23, dadurch gekennzeichnet, daß der Zuschnitt (58) aus Gewebe, Gewirke oder Vliesmaterial an einer seiner Längsseiten (12) mit einem Einschnitt (59) versehen ist.

30. Abdichtelement nach Anspruch 29, dadurch gekennzeichnet, daß der Einschnitt (59) etwa in der Mitte der Längsseite (12) vorgesehen ist, rechtwinklig zu dieser verläuft und mit seinem der Längsseite (12) abgewandten Ende ein wenig über eine sich durch den Zuschnitt (58) erstreckende Längsachse (13) herausragt.

31. Abdichtelement nach Anspruch 30, dadurch gekennzeichnet, daß durch den Einschnitt (59) zwei einander mit ihren Begrenzungen (83, 84) benachbarte Streifen (2c, 2d) voneinander getrennt sind.

32. Abdichtelement nach Anspruch 29 bis 31, dadurch gekennzeichnet, daß der auf den Zuschnitt (58) aufzuvulkanisierende Kautschukstreifen (8) an einer seiner Längsseiten (20) einen Einschnitt (61) aufweist, der etwa in der Mitte der Längsseite (20) rechtwinklig zu dieser verläuft und ein wenig über eine sich durch den Kautschukstreifen (8) erstreckende Mittellinie (63) herausragt.

33. Abdichtelement nach einem der Ansprüche 29 bis 32, dadurch gekennzeichnet, daß ein die durch den Einschnitt (59) voneinander getrennten Streifen (2c, 2d) verbindendes Einsatzstück (64) aus Gewebe, Gewirke oder Vliesmaterial vorgesehen ist, das eine Leerstelle (86) ausfüllt, die nach einer Verformung des Abdichtelementes (1) zur Außenecke entsteht.

34. Abdichtelement nach Anspruch 33, dadurch gekennzeichnet, daß die Leerstelle (86) zwischen den beiden durch den Einschnitt (59) voneinander getrennten Begrenzungen (83, 84) vorgesehen ist, von denen je eine nach einer Verformung des Zuschnittes (58) zur Außenecke jeweils einen Streifen (2c, 2d) begrenzt, die von einem von der Außenecke umschlossenen Innenraum (29) weg nach außen weisen.

35. Abdichtelement nach einem der Ansprüche 33 und 34, dadurch gekennzeichnet, daß das Einsatzstück (64) zwei Schenkel (66, 67) von jeweils einer der Hälften des Zuschnittes (58) entsprechenden Breite aufweist, die in einem Winkel (65) aufeinanderstoßen, der dem zwischen dem Streifen (2a, 2b) liegenden Winkel entspricht und mit ihren voneinander abgewandten Enden (68, 69) über die Begrenzungen (83, 84) hinaus auf die nach der Verformung voneinander abgespreizten Hälften des Zuschnittes (58) hinüberragen.

36. Abdichtelement nach einem der Ansprüche 33 bis 35, dadurch gekennzeichnet, daß das Einsatzstück (64) auf dem mit dem Kautschukstreifen (8) belegten Zuschnitt (58) so befestigt ist, daß eine gedachte Trennungslinie (89), die entlang einer dem zweiten Schenkel zugewandten Innenkante des ersten Schenkels (66) verläuft und das Einsatzstück (64) in ein größeres und in ein kleineres Rechteck (90, 91) unterteilt, entlang dem Einschnitt (59) verläuft und das größere Rechteck (90) sich von der dem Einschnitt (59) benachbarten Längskante (12) in Richtung auf eine Mittellinie (13) erstreckt, die von einer das größere Rechteck (90) begrenzenden Seitenkante (92) rechtwinklig geschnitten wird, und das kleinere Rechteck (91) mit seinem in das größere Rechteck (90) einmündende Seitenkanten (93) parallel zur Längsseite (12) des Zuschnittes (58) verläuft und sich jenseits des Einschnittes (59) im Bereich des dem Einschnitt (59) benachbarten Streifens erstreckt.

37. Abdichtelement nach Anspruch 36, dadurch gekennzeichnet, daß das Einsatzstück (64) auf dem den Zuschnitt (58) teilweise bedeckenden Kautschukstreifen (8) aufliegt und im Bereich des kleinen Rechtecks durch Druck am Kautschukstreifen (8) befestigt ist, während der übrige Teil des Einsatzstückes (64) unbefestigt auf dem Kautschukstreifen (8) aufliegt.

38. Abdichtelement nach einem der Ansprüche 33 bis 37, dadurch gekennzeichnet, daß ein Teil des auf dem Kautschukstreifen (8) aufliegenden Einsatzstückes (64) von einer Kautschukabdeckung (70) abgedeckt ist.

39. Abdichtelement nach Anspruch 38, dadurch gekennzeichnet, daß die Kautschukabdeckung (70) in ihrer Größe derjenigen einer Teilstelle entspricht, die von der Leerstelle (86) im Bereich des Kautschukstreifens (8) liegt.

40. Abdichtelement nach einem der Ansprüche 38 und 39, dadurch gekennzeichnet, daß die Kautschukabdeckung (70) als ein Quadrat ausgebildet ist, das im Bereich des größeren Rechtecks (90) auf dem Einsatzstück (64) so aufliegt, daß eine Kante (76) des Quadrates entlang des Einschnittes (59) verläuft und eine dazu senkrecht verlaufende Kante (76) entlang einer sich unterhalb des Einsatzstückes (64) erstreckenden Längsseite (20) des Kautschukstreifens (8) verläuft, die dem Einschnitt (61) benachbart ist.

41. Verfahren zur Herstellung eines vorgefertigten Abdichtelementes, gekennzeichnet durch die folgenden Schritte:
a) Ein rechteckiger Zuschnitt (6, 58) aus einem Gewebe, Gewirke oder Vliesmaterial mit einer Länge von mindestens zwei in Längsrichtung aneinandergefügten Streifen (2a, 2b, 2c, 2d) und einer Breite von mindestens in Querrichtung aneinandergefügten Streifen wird auf einer seiner Längsseiten (12) mit einem Ein- oder Ausschnitt (14, 59) versehen, der sich etwa bis zu einer sich durch den Zuschnitt (6, 58) erstreckenden Mittellinie erstreckt.
b) Der Zuschnitt (6, 58) wird auf mindestens einer Breitseitenfläche mit einem rechteckigen, auf einer seiner Längsseiten (20) mit einem Ein- oder Ausschnitt (22, 61) versehenen Kautschukstreifen (8) belegt, so daß der Ein- oder Ausschnitt (22, 61) des Kautschukstreifens (8) über dem Ein- oder Ausschnitt (14, 59) des Zuschnittes (6, 58) liegt.
c) Der mit dem Kautschukstreifen (8) belegte Zuschnitt (6, 58) wird unter Ausnutzung von Verbindungsrändern in eine der Gestalt des Abdichtelementes (1) entsprechende Gestalt vorgefaltet.
d) Der Kautschukstreifen (8) wird in einer beheizbaren Form (26) auf den Zuschnitt (6, 58) aufvulkanisiert.

42. Verfahren nach Anspruch 41 zur Herstellung eines Abdichtelementes für eine Innenecke, dadurch gekennzeichnet, daß sowohl der Zuschnitt (58) als auch der Kautschukstreifen (8) vor dem Belegen mit einem V-förmigen Ausschnitt (14, 22) versehen werden.

43. Verfahren nach Anspruch 42, dadurch gekennzeichnet, daß der Zuschnitt (58) beidseitig mit einem Kautschukstreifen (8) belegt wird.

44. Verfahren nach einem der Ansprüche 41 bis 43, dadurch gekennzeichnet, daß der Kautschukstreifen (8) vor dem Auflegen auf den Zuschnitt (58) unter Verringerung seiner Dicke kalandriert wird.

45. Verfahren nach einem der Ansprüche 41 bis 44, dadurch gekennzeichnet, daß ein einseitig über einen Rand des Ausschnittes (22) des Kautschukstreifens (8) überstehender Rand (16) des Ein- oder Ausschnittes (14) des Zuschnittes (58) beim Vorfalten des belegten Zuschnittes (58) auf der gegenüberliegenden Seite des Ausschnittes (14) auf eine vom Zuschnitt (58) weg gerichtete Oberfläche des Kautschukstreifens (8) aufgelegt und auf diese aufvulkanisiert wird.

46. Verfahren nach einem der Ansprüche 41 bis 44, dadurch gekennzeichnet, daß ein einseitig über einen Rand des Ausschnittes (22) des Kautschukstreifens (8) überstehender Rand (16) des Ein- oder Ausschnittes (14) des Zuschnittes (58) beim Vorfalten des belegten Zuschnittes (58) auf der gegenüberliegenden Seite des Ausschnittes (14) unter eine auf den Zuschnitt (58) zu gerichtete Oberfläche des Kautschukstreifens (8) geschoben und unter dieser einvulkanisiert wird.

47. Verfahren nach Anspruch 41, 43, 44 zur Herstellung eines Abdichtelemtentes für eine Außenecke, dadurch gekennzeichnet, daß nach dem Auflegen des Kautschukstreifens (8) auf den Zuschnitt (58) der Kautschukstreifen (8) mit einem aus Gewebe, Gewirke oder Vließmaterial bestehenden Einsatzstück (64) belegt wird, mit dem eine beim Falten des Zuschnittes (58) und des Kautschukstreifens (8) im Bereich des Einschnittes (61) zwischen einander benachbarten Streifen (2c, 2d) entstehende Leerstelle (86) bedeckt wird.

48. Verfahren nach Anspruch 47, dadurch gekennzeichnet, daß mit dem Einsatzstück (64) die der Leerstelle (86) benachbarten Streifen (2c, 2d) miteinander verbunden werden.

49. Verfahren nach Anspruch 47 und 48, dadurch gekennzeichnet, daß das Einsatzstück (64) als ein mit zwei Schenkeln (66, 67) versehenes Winkelstück ausgebildet wird, dessen Winkel (65) einem von den an den Außenflächen (36, 37) anliegenden Streifen (2a, 2b) eingeschlossenen Winkel angepaßt wird und dessen Schenkel (66, 67) mit dem an der Bodenfläche oder Deckenfläche (38) anliegenden Streifen (2c, 2d) verbunden werden.

50. Verfahren nach einem der Ansprüche 47 bis 49, dadurch gekennzeichnet, daß das Einsatzstück (64) vor dem Falten des Zuschnittes (58) und des Kautschukstreifens (8) auf dem Kautschukstreifen (8) im Bereich eines auf dem Streifen (2d) aufliegenden Teils (88) befestigt wird und der übrige Teil des Einsatzstückes (64) beim Falten des Zuschnittes (58) und des Kautschukstreifens (8) gegenüber diesem aufliegenden Teil (88) so bewegt wird, bis der andere Schenkel (66) auf den anderen Streifen (2c) ragt und die Leerstelle (86) vom Einsatzstück (64) bedeckt wird.

51. Verfahren nach Anspruch 47 bis 50, dadurch gekennzeichnet, daß auf das Einsatzstück (64) eine Kautschukabdeckung (70) an einer Stelle befestigt wird, die nach dem Falten des Zuschnittes (58) und des Kautschukstreifens (8) auf einen Teil der Leerstelle (86) verschoben wird, der zwischen einander benachbarten Seitenbegrenzungen (72, 73) des Einschnittes (61) liegt und beim Falten des Zuschnittes (58) und der Kautschukabdeckung (70) entstanden ist.

52. Verfahren nach einem der Ansprüche 41 bis 51, dadurch gekennzeichnet, daß der vorgefaltete, belegte Zuschnitt (6, 58) in ein erstes Formteil (24) der Form (26) eingelegt und daß ein zweites Formteil (28) gegen das erste Formteil (24) angelegt wird, das im anliegenden Zustand mit dem ersten Formteil (24) einen der Form des fertiggestellten Abdichtelementes (1) entsprechenden Hohraum umschließt.
